Europäisches Patentamt

European Patent Office

Office européen des brevets

(19)

(11) Publication number: **0 293 501**
**A1**

(12) # EUROPEAN PATENT APPLICATION

(21) Application number: **87107926.5**

(22) Date of filing: **02.06.87**

(51) Int. Cl.⁴ **G01C 9/12** , **G01C 9/04**

(43) Date of publication of application:
**07.12.88 Bulletin 88/49**

(84) Designated Contracting States:
**AT CH DE ES FR GB LI**

(71) Applicant: **Segoni, Aldo**
**via della Gore 37**
**Florence(IT)**

(72) Inventor: **Segoni, Aldo**
**via della Gore 37**
**Florence(IT)**

(74) Representative: **Sassatelli, Franco T., Dr.**
**c/o INIP via Ruggi 5**
**I-40137 Bologna(IT)**

(54) **Gradient-meter for motor-driven vehicles for checking the gradient of the road they are running on.**

(57) The invention object is an instrument- device in transparent envelope (1) to fit on motor-driven vehicles either on the lower side of the wind-shield or above the dashboard, and this device enables the driver during the trip to read the slop of the vehicle in the running sense. This instrument (1) is characterized by a mobile coloured plane which, after a proper self-control, slides in superposition on another fixed plane having a different colour, so that, because the "chromatic blindness" effect, a valid and easy reading of the value to check can be obtained.

FIG. 1

## "Gradient-meter for motor-driven vehicles for checking the gradient of the road they are running on".

Object of the present invention is an instrument with particular transparency visibility, apt to check the slope of the vehicles both when ascending and when descending. The above instrument, particularly suited for motor-vehicles, can be fitted either on the dashboard or on the lower part of the windshield, so that to allow an easy visibility to the driver without distracting his attention from the drive. It needs no electrical or any other supply since its operation is autonomous.

The utility of this instrument is represented by the circumstance that, in general, the drive is unable to value the gradient fairly enough, if any, of the way he is running on, and this is due to different causes: impossibility of comparison with a reference base plane, light winds that may alter the motor efficiency and so on. The usefulness of the invention device consists, for instance in the charge-motor-vehicles, in the possibility of timely changing the speed before perceiving the loss of the motor revolutions on account of the greater effort in consequence of the unaperceived slant. Also when descending, the fact of perceiving the exact gradient value can afford to the driver a more exact evaluation for the speed to insert. Moreover, the circumstance of having the slight slope of the road well evident, which cannot be easily evaluated at a glance, when the driver is about to leave the stopped vehicle, enables him to judge whether he should make the necessary arrangements against the risk of a self-move, thus avoiding the heavy consequences which often occur in such cases.

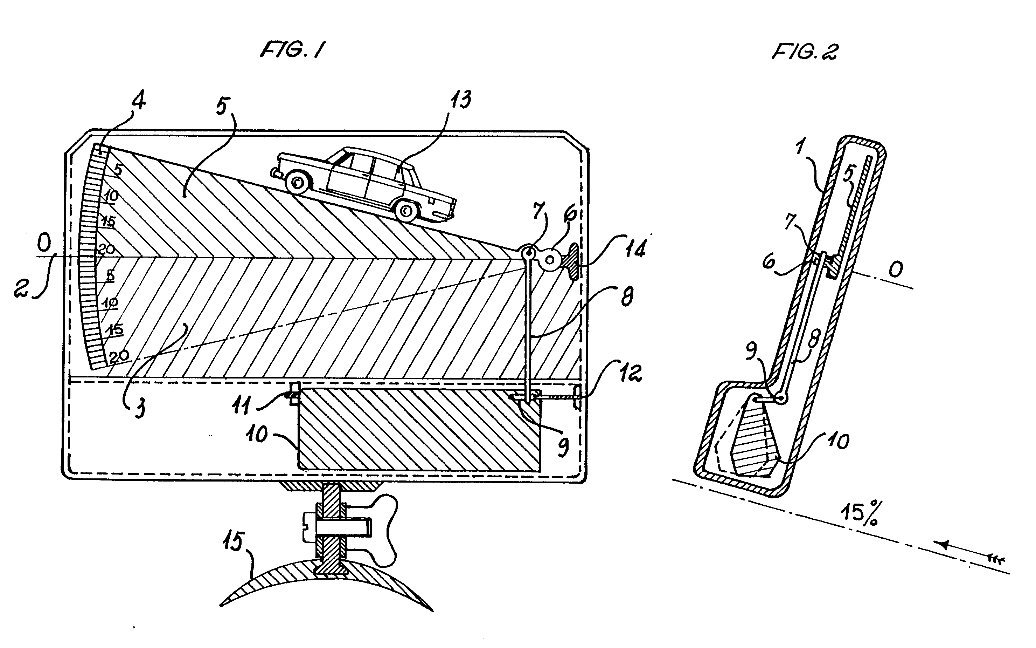

The invention device is illustrated in the drawings of table 1, where fig. 1 is the perspective view of the device, whereas fig. 2 is the section view.

In a version, the instrument consists of a rectangular envelope in transparent material 1 in which a plane line 2 is marked on the ground representing the 0 (zero) as starting reading base. The whole for instance red-coloured and transparent lower zone 3 has the graphically marked graduation 4 on one side for reading the slant grades in percent. Superposed on this bottom, another mobile also transparent -but differentrly coloured, for instance green - is fitted with side fulcrum 6 and also with graphical graduation 4. This plane is connected by means of joint 7, articulation 8 and another joint 9, with a counterweight 10 which is swinging in both supports 11 and 12, and is fitted with a counterpoise 14 to compensate its own weight which might negatively gravitate against the operation. The instrument is fitted with a support 15 which is articulated so as to regulate the setting-up (zero) in the device. On the upper line of plane 5, the drawing of a motor-driven vehicle 13 can be seen which will give the actual view of how the vehicle is on that given slant. The device represented by the mobile plane 5 and controlled by counterpoise 10 will be shifted upwards as soon as the route gradient changes start ing from zero height and reaching the maximum heigh foreseen of approx. 20%. Reading is facilitated by the circumstance that as soon as the mobile plane 5 is shifted upwards, i.e. showing an ascent, the whole zone interested in the reading will appear in green colour. This optical evidencing is due to the fact that since the two planes 3 and 5 are of two different proper colours, when they are superposed, owing to the "chromatic blidness", i.e. in the plane position of the vehicle, the zone from 0 (zero) line downwards appears to be black, whereas the upper part is completely white. The same occurs when the instrument indicates the descent: i.e. when the plane 5 sinks from line 0 (zero); in this case, the zone which is covered will appear in red colour.

## Claims

1) Gradient-meter for motor-driver vehicles for checking the gradient of the road they are running on, characterized by the fact that a stiff transparent envelope (1) is used with a straight line (2) marked on the ground and representing the reading base. The whole lower zone (3) has a given colour and shows a side graduation (4) for reading the slant degrees. On the said ground, a mobile plane (5) with different colour has its fulcrum (6) near by sidewise, with a graduate scale (4) too. This plane is connected, by means of an articulation (7), connecting rod (8) and a second articulation (9), to a counterweight (1) which swings in two supports (11 and 12) and is fitted with a second counterpoise (14) for compensating its own weight. The instrument is fitted with an articulated support (15) for regulating the 0 (zero) setting of the device. On the upper part of the plane (5), a motor-driven vehicle (13) is represented which serves as the actual sight. The device represented by the mobile plane (5) controlled by the counterpoised (10) movement is shifted upwards when the road gradient is increasing and, in conformity, the whole zone interested in reading appears with a given colour. This optical evidencing is increased by the fact that the two flats are differently coloured, for instance red and green, and through the "chromatic blindness", when superposed, they are causing, the zone below the flat line appears black.

FIG.2

FIG.1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A- 835 353 (G. WAIDMANN) * Whole document * | 1 | G 01 C 9/12 G 01 C 9/04 |
| A | US-A-1 492 156 (F. CALDWELL) * Whole document * | 1 | |
| A | US-A-1 593 262 (F. JACKSON) * Whole document * | 1 | |

TECHNICAL FIELDS SEARCHED (Int. Cl.4)

G 01 C

The present search report has been drawn up for all claims

| Place of search | Date of completion of the search | Examiner |
|---|---|---|
| THE HAGUE | 08-02-1988 | DE BUYZER H.J. |

EPO FORM 1503 03.82 (P0401)